Europäisches Patentamt

European Patent Office

Office européen des brevets

(11) Publication number: **0 277 750**
**A2**

# EUROPEAN PATENT APPLICATION

(21) Application number: **88300639.7**

(22) Date of filing: **26.01.88**

(51) Int. Cl.4: **C08L 23/02** , **C08J 3/04**

(30) Priority: **26.01.87 JP 14216/87**

(43) Date of publication of application:
**10.08.88 Bulletin 88/32**

(84) Designated Contracting States:
**DE FR GB IT NL**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **Shigeta, Yasujiro**
**12-4, Shinmachi 2-chome**
**Ohtake-shi Hiroshima-ken(JP)**
Inventor: **Yamanaka, Takashi**
**21-6, Yuumi 2-chome**
**Ohtake-shi Hiroshima-ken(JP)**
Inventor: **Kato, Akifumi**
**12-3, Shinmachi 2-chome**
**Ohtake-shi Hiroshima-ken(JP)**

(74) Representative: **Cresswell, Thomas Anthony et al**
**J.A. Kemp & Co. 14 South Square Gray's Inn London WC1R 5EU(GB)**

(54) Ultrahigh-molecular-weight polyolefin composition and process for production thereof.

(57) An ultrahigh-molecular-weight polyolefin composition having excellent stretchability, storage stability and transportation stability is obtained by mixing a powder of an ultrahigh-molecular-weight polyolefin with a normally solid flowability improver at a temperature lower than the melting point of the polyolefin to form a dispersion, and then melt-kneading the dispersion. This composition is useful for the production of stretched articles such as stretched filaments.

EP 0 277 750 A2

# ULTRAHIGH-MOLECULAR-WEIGHT POLYOLEFIN COMPOSITION AND PROCESS FOR PRODUCTION THEREOF

## BACKGROUND OF THE INVENTION

### 1. Field of the Invention

This invention relates to a process for producing an ultrahigh-molecular-weight polyolefin composition having superior moldability and stretchability. More specifically, it relates to a process for producing a composition comprising an ultrahigh-molecular-weight polyolefin and a normally solid flowability improver which has excellent stretchability, storage stability and transportation stability and is suitable for producing ultrahigh-molecular-weight polyolefin stretched articles having high modulus and tensile strength. The invention also relates to a process for producing a stretched article of the ultrahigh-molecular-weight polyolefin from this composition.

### 2. Description of the Prior Art

It has already been known to produce molecularly oriented molded articles having high modulus and tensile strength by molding ultrahigh-molecular-weight polyolefins into fibers, tapes and other articles and stretching them. For example, Japanses Laid-Open Patent Publication No. 15408/1981 discloses that a dilute solution of an ultrahigh-molecular-weight polyolefin is spun and the resulting filaments are stretched. Polyolefins having a high molecular weight are very sparingly soluble in solvents, and uniform solutions of high concentration are difficult to obtain. This is substantiated from the fact that although this Japanese patent document generally describes the use of solutions with a concentrationof 1 to 50% by weight, the working examples given there disclose the use of solutions having a concentration of about 8% by weight at most, and with polyolefins having a molecular weight of more than one million, only the use of solutions having a concentration of as low as 3% by weight. Thus, in practicing the method described in the above patent document on an industrial scale, many problems are left to be solved, such as the treatment of a large amount of solvent and unsatisfactory productivity, and it is desired to develop a technique of spinning from a high-concentration solution of an ultrahigh-molecular-weight polyolefin.

For the preparation of a uniform solution of an ultrahigh-molecular-weight polyolefin, a method was previously proposed (Japanese Laid-Open Patent Publication No. 89232/1986) which comprises mixing a normally liquid solvent and the ultrahigh-molecular-weight polyolefin with stirring at a temperature below the temperature at which the ultrahigh-molecular-weight polyolefin dissolves, to form a suspension, and feeding the suspension into an extruder maintained at the dissolving temperature of the ultrahigh-molecular-weight polyolefin to form a uniform solution. When the resulting polyolefin composition is stored at ordinary temperature, the normally liquid solvent spontaneously flows out of the polyolefin composition to change the concentration of the polyolefin or vary it from part to part. The composition with varying concentrations is often difficult, or impossible, of uniform stretching.

Methods have also been proposed in which normally solid flowability improvers such as paraffin waxes are used for improving the flowability of ultrahigh-molecular-weight polyolefins (see, for example, Japanese Laid-Open Patent Publication Nos. 130313/1984 and 197752/1985). It was found that by such methods, the ultrahigh-molecular-weight polyolefins can be molded by using single-screw extruders normally used in extrusion molding.

It was further found that even by these methods, it sometimes happens that the ultrahigh-molecular-weight polyolefins are not fully dispersed within the single-screw extruders depending upon the pretreating conditions employed at the time of mixing these polyolefins with normally solid flowability improvers. Specifically, when the ultrahigh-molecular-weight polyolefin and the normally solid flowability improver are merely mixed in the solid state by a Henschel mixer or the like, the resulting mixture is unlikely to be melt-mixed sufficiently uniformly by a single-screw extruder alone. By the method described in the above-cited Japanese Laid-Open Patent Publication No. 197752/1985 in which a powdery mixture of the ultrahigh-molecular-weight polyolefin and the flowability improver is first left to stand at a temperature above the melting point of the ultrahigh-molecular weight polyolefin, the polyolefin is melted to make the viscosity of the mixture extremely high, and therefore as described in the above patent document, the mixture should be melt-kneaded by using a melt-keading machine such as a Banbury mixer before the mixture is fed into the extruder.

## SUMMARY OF THE INVENTION

It is an object of this invention to provide a composition comprising an ultrahigh-molecular-weight polyolefin and a normally solid flowability improver and having excellent storage stability, transportation stability, moldability and stretchability, and a process for production thereof.

Another object of this invention is to provide an ultrahigh-molecular-weight polyolefin dispersion from which a melt-kneaded mixture having a uniform dispersed state and containing the ultrahigh-molecular-weight polyolefin in a high concentration can be produced, and which can give a composition having excellent melt-moldability and stretchability.

Still another object of this ianvention is to provide a process by which a stretched molded article having high strength and modulus can be produced from the above ultrahigh-molecular-weight polyolefin dispersion.

According to this invention, there is provided a process for producing an ultrahigh-molecular-weight polyolefin composition having excellent storage stability, transportation stability, moldability and stretchability, which comprises mixing a powder of an ultrahigh-molecular-weight polyolefin (A) having an intrinsic viscosity $(\eta)$ of at least 5 dl/g and a flowability improver (B) being normally solid and having a melting point lower than the melting point of the polyolefin (A) with stirring at a temperature corresponding to the melting point of the flowability improver (B) or higher but lower than the melting point of the polyolefin (A), and then melt-kneading the resulting mixture at a temperature corresponding to the melting point of the polyolefin (A) or higher.

According to another aspect of the invention, there is provided a process for producing a stretched article of an ultrahigh-molecular-weight polyolefin, which comprises mixing 10 to 80% by weight of a powder having a particle diameter of 1 to 300 microns of an ultrahigh-molecular-weight polyolefin (A) having an intrinsic viscosity $(\eta)$ of 5 to 30 dl/g and 90 to 20% by weight of a flowability improver (B) being normally solid and having a melting point 20 to 70°C lower than the melting point of the polyolefin (A) at a temperature corresponding to the melting point of the flowability improver (B) or higher but lower than the melting point of the polyolefin (A) thereby to form a dispersion in which the flowability improver (B) is a dispersion medium and the particles of the polyolefin (A) are a disperse phase and the polyolefin (A) is in the state of being not substantially dissolved in, but being swollen with, the flowability improver (B), melt-kneading the dispersion at a temperature corresponding to the melting point of the polyolefin (A) or higher, extruding the melt-kneaded mixture through a die to form a molded article, stretching the extrusion-molded article, and removing the flowability improver (B) from the molded article before, during or after the stretching.

The invention also provides an ultrahigh-molecular-weight polyolefin dispersion composed of a disperse phase of particles with a particle diameter of 1 to 300 microns composed of an ultrahigh-molecular-weight polyolefin (A) having an intrinsic viscosity $(\eta)$ of 5 to 30 dl/g and a continuous dispersion medium of a flowability improver (B) being normally solid and having a melting point 20 to 70°C lower than the melting point of the polyolefin (A), said polyolefin (A) being present in an amount of 10 to 80% by weight and said flowability improver (B) being present in an amount of 90 to 20% by weight, and said polyolefin (A) being in the state of being not substantially dissolved in, but being swollen with, the flowability improver (B) to a swelling ratio of 1.03 to 1.5 by weight.

## DETAILED DESCRIPTION OF PREFERRED EMBODIMENTS

This invention is based on the finding that by first forming a dispersion in which a powder of the ultrahigh-molecular-weight polyolefin (A) is dispersed as particles in a continuous dispersion medium of the normally solid flowability improver and then melt-kneading the dispersion, a composition can be obtained which contains the ultrahigh-molecular-weight polyolefin in a high concentration and in which the state of dispersion of the polyolefin (A) in the flowability improver (B) is very fine and homogeneous.

Since the concentration of the component (A) is high in the composition of this invention, it brings about the advantage of increasing the efficiency of extruding the composition and the productivity of the process.

Furthermore, the composition has superior storage or transportation stability since the state of mixing the components (A) and (B) is very fine and homogeneous and the component (B) is solid at ordinary temperatures. Specifically, when the composition is extruded into a molded article such as a filament and stored or transported prior to an operation of stretching the molded article, the molded article is stably maintained in the as-molded state without occurrence of variation in composition or segregation. Moreover, since the state of mixing the two components is fine and homogeneous, the composition has excellent stretchability and shows the advantage of being able to be stretched at a high ratio to give a stretched article having high strength and modulus.

In addition, the present invention brings about the unexpected advantage that in a stretched article formed from the composition of this invention, the reduction of the molecular weight of the ultrahigh-molecular-weight polyolefin is very little. For example, the intrinsic viscosity ($\eta$) of a stretched article obtained by using a uniform solution of an ultrahigh-molecular weight polyolefin generally decrease by not more than 15 % from that of the starting polyolefin. In contrast, the intrinsic viscosity ($\eta$) of a stretched article obtained from the dispersion of this invention as a starting material is generally maintained at not more than 14 %, preferably not more than 10 %, especially preferably not more than 7 %, of that of the starting polyolefin. This decrease in ($\eta$) is referred to as the ratio of decrease of ($\eta$) and defined by the following equation.

$$\text{Ratio of decrease of } (\eta) \, (\%) = \frac{(\eta) \text{ of the starting material} - (\eta) \text{ of the stretched article}}{(\eta) \text{ of the starting material}} \times 100$$

For this reason, stretched articles produced in accordance with this invention advantageously have higher thermal stability and strength than conventional stretched articles. This is presumably because in the present invention, the ultrahigh-molecular-weight polyolefin can be melt-kneaded while it is in a high concentration and the melt-kneading can be carried out with a relatively short heat history, and therefore, the degree of thermal degradation in the composition is small. It should be understood however that the invention is not bound to this presumption.

The ultrahigh-molecular-weight polyolefin (A) used in this invention has an intrinsic viscosity ($\eta$), measured at 135°C in a decalin solvent, of at least 5 dl/g, preferably 7 to 30 dl/g. If its intrinsic viscosity is less than 5 dl/g, high modulus and strength properties tend to be difficult to achieve although a uniform mixture can be easily prepared from such a polyolefin. There is no particular restriction on the upper limit of the intrinsic viscosity of the polyolefin. If it exceeds 30 dl/g, the polyolefin has too high a melt viscosity even after addition of the flowability improver (B) and tends to have degraded extrusion-moldability.

The ultrahigh-molecular-weight polyolefin used in this invention includes homopolymers and copolymers of alpha-olefins such as ethylene, propylene, 1-butene, 1-pentene, 1-hexene, 1-octene, 1-decene and 4-methyl-1-pentene. Ethylene homopolymer and copolymers of a major proportion of ethylene and a minor proportion of another alpha-olefin which have high crystallinity are preferred because they can give products having high modulus and high tensile strength.

The ultrahigh-molecular-weight polyolefin used in this invention is a powder having a particle diameter of usually 1 to 300 microns, preferably 5 to 200 microns. Those having a particle diameter of more than 300 microns are too large in size so that when mixed with the flowability improver (B), they may not give suspensions having good dispersibility.

The flowability improver (B) used in this invention is a low-molecular-weight compound which is solid at ordinary temperatures (normally solid), has a melting point lower than the melting point of the ultrahigh-molecular-weight polyolefin, and shows good dispersibility when mixed with the ultrahigh-molecular-weight polyolefin. It may suitably be aliphatic hydrocarbon compounds and their derivatives. Desirably, the flowability improver (B) has a melting point 20 to 70°C, especially 30 to 70°C, lower than the melting point of the ultrahigh-molecular-weight polyolefin.

The aliphatic hydrocarbon compounds may be, for example, saturated aliphatic hydrocarbon compounds. Specific examples include n-alkanes having at least 22 carbon atoms such as docosane, tricosane, tetracosane and triacontane, mixtures of a major proportion of these alkanes with a minor proportion of lower n-alkanes, paraffin waxes isolated and purified from petroleum, low-to medium-pressure polyethylene waxes, high-pressure polyethylene waxes and ethylene copolymer waxes which are low-molecular-weight polymers obtained by polymerizing ethylene or ethylene and other alphaolefins, waxes obtained by lowering various grades of polyethylene such as low-to medium-pressure polyethylene and high-pressure polyethylene by thermal degradation, oxidized waxes which are the oxidation products of the above waxes, and maleic acid-modified products of the above waxes.

Examples of the derivatives of aliphatic hydrocarbon compounds are fatty acids, aliphatic alcohols, fatty acid amides, fatty acid esters, aliphatic mercaptans, aliphatic aldehydes and aliphatic ketones having at least 10, preferably 12 to 50, carbon atoms and a molecular weight of 150 to 2000, preferably 170 to 800.

Specific examples are capric acid, lauric acid, myristic acid, palmitic acid, stearic acid and oleic acid as the fatty acids, myristyl alcohol, cetyl alcohol and stearyl alcohol as the aliphatic alcohols capramide, lauramide, palmitamide and stearamide as the fatty acid amides, and stearyl acetate as the fatty acid esters.

The aliphatic hydrocarbon compounds or their derivatives may be used as mixtures with hydrocarbon polymers having a low softening point of 50 to 120°C in amounts which do not impair the objects of this invention. The low-softening-point hydrocarbon polymers may be those used as tackifier resins in the field of adhesive tapes, paints and hot-melt adhesives. Specific examples include aliphatic hydrocarbon resins obtained by polymerizing a $C_4$ fraction, a $C_5$ fraction or a mixture of both obtained by cracking of petroleum and naptha, or isoprene and 1,3-pentadiene in any such fraction, for example, the $C_5$ fraction as main materials; aromatic hydrocarbon resins obtained by polymerizing styrene derivatives and indenes in a $C_9$ fraction obtained by cracking of petroleum or naphtha as main materials; aliphatic-aromatic hydrocarbon copolymer resins obtained by copolymerizing the $C_4$ fraction or $C_5$ fraction with the $C_9$ fraction; alicyclic hydrocarbon resins obtained by hydrogenating the aromatic hydrocarbon resins; synthetic terpene-type hydrocarbon resins containing aliphatic, alicyclic and aromatic structures; terpene-type hydrocarbon resins obtained by polymerizing alpha, beta-pinene in the terpene oil as a material; coumarone-indene hydrocarbon resins obtained by polymerizing idenes and styrenes in coal tar-type naphtha; low-molecular-weight styrene resins; and rosin-type hydrocarbon resins.

The amount of the powdery ultrahigh-molecular-weight polyolefin (A) to be mixed with the flowability improver (B) is 10 to 80% by weight, preferably 20 to 60% by weight. In other words, the amount of the flowability improver (B) to be mixed with the polyolefin (A) is 20 to 90% by weight, preferably 40 to 80% by weight. The ultrahigh-molecular-weight polyolefin powder (A) absorbs the flowability improver (B) and swells to some extent even at a temperature below its melting point. If the amount of the flowability improver (B) is less than 20% by weight, it may not be possible to secure sufficient flowability for achieving uniformity at the time of mixing the components with stirring at an elevated temperature. Furthermore, the resulting mixture has a high melt viscosity so that its extrusion tends to become difficult. Amounts exceeding 90% by weight are often undesirable in industrial practice because a large amount of the flowability improver must be handled and the productivity tends to be reduced.

The process of this invention involves mixing the powder of the ultrahigh-molecular-weight polyolefin (A) with the flowability improver (B) with stirring at a temperature corresponding to the melting point of the flowability improver (B) or higher but lower than the melting point of the ultrahigh-molecular-weight polyolefin (A), and then melt-kneading the mixture at a temperature corresponding to the melting point of the ultrahigh-moelcular-weight polyolefin (A) or higher. In the mixing step, it is possible to mix the powdery polyolefin (A) and the flowability improver (B) in predetermined amounts, heat the mixture at a temperature corresponding to the melting point of the flowability improver (B) or higher but lower than the melting point of the polyolefin (A) to melt only the flowability improver (B), and stir the mixture while only the flowability improver (B) is melted. Alternatively, it is possible to put the powdery polyolefin (A) in a solution of the flowability improver (B) only, and mix them with stirring. If the temperature of the mixture at the time of mixing with stirring is lower than the melting point of the flowability improver (B), dispersing of the components is poor because both are solids. On the other hand, if the temperature of the mixture is higher than the melting point of the ultrahigh-molecular-weight polyolefin (A), the polyolefin is melted and the viscosity of the mixture rises rapidly so that it is difficult to stir. The temperature at which the powder of the polyolefin (A) and the flowability improver (B) are stirred is preferably a temperature 10°C higher than the melting point of the flowability improver (B) but 20°C lower than the melting point of the polyolefin (A). Desirably, in view of dispersibility, the temperature ($T_1$) at which the dispersion is formed is a temperature at which the viscosity of the flowability improver (B) becomes 1 to 50 centipoises, particularly 1 to 20 centipoises.

The process of this invention can give a dispersion composed of a continuous dispersion medium of the flowability improver (B) and a disperse phase of the particles of the ultrahigh-molecular-weight polyolefin (A) dispersed in the medium as fine particles. In the dispersion formed by this invention, the ultrahigh-molecular-weight polyolefin (A) is not substantially dissolved in the flowability improver (B) but is swollen with the flowability improver (B). The extent of swelling differs depending upon the type of the flowability improver (B) and the temperature ($T_1$) at the time of mixing. The swelling ratio defined by the ratio of the weight of the swollen particles to the weight of the particles before swelling is generally from 1.03 to 1.50, especially from 1.05 to 1.30. If the swelling ratio is larger than the specified limit, the viscosity of the dispersion tends to become high. On the other hand, if the swelling ratio is lower than the specified limit, there is a tendency to the need for more severe kneading conditions to effect homogeneous melt-kneading.

In the production of the dispersion, sterically hindered phenols known per se may be added in an amount of 0.02 to 1.0 % by weight, specially 0.05 to 0.5 % by weight.

After the ultrahigh-molecular-weight polyolefin (A) in powder and the flowability improver (B) are mixed with stirring, the mixture is melt-kneaded at a temperature (T₂) corresponding to the melting point of the polyolefin (A) or higher.

The mixture of the polyolefin powder (A) and the flowability improver (B) used in the process of this invention is a low-viscosity dispersion in which the polyolefin (A) absorbing a melt of the flowability improver (B) and swollen to some extent is dispersed in the melt of the flowability improver (B). Accordingly, melt-kneading of the mixture is preferably carried out by means of, for example, a twin-screw extruder or a single-screw extruder in which the inside surface of the cylinder is formed in a thread-like roughened surface. A twin-screw extruder in which the screw are designed to rotate in the same direction is especially preferred because it has good extrusion stability and self-cleaning property. When a mere full-flighted single-screw extruder is used, surging sometimes occurs. The present temperature of the twin-screw extruder or the like is such that usually the feed portion is kept at a temperature corresponding to the melting point of the flowability improver (B) or higher but below the melting point of the ultrahigh-molecular-weight polyolefin (A), and the mixing portion is maintained at a temperature ranging from the melting point to the decomposition point of the ultrahigh-molecular-weight polyolefin (A). If the temperature of the feed portion is lower than the melting point of the flowability improver (B), the flowability improver (B) solidifies, adheres to the inlet of the extruder and grows to narrow the flow passage at the inelt. Hence, the supply of the kneaded mixture is liable to become unstable. The same phenomenon is likely to occur when the temperature of the feed portion is the melting point of the polyolefin (A) or higher. The preferred present temperature is from 40°C lower than the melting point of the polyolefin (A) to 10°C lower than the melting point of the polyolefin (A) at the feed portion, and 10°C lower than the melting point of the polyolefin (A) to 20°C higher than its melting point at a first conveying portion. The residence time of the mixture in the twin-screw extruder or the like is usually 0.3 to 30 minutes. If it is less than 0.3 minute, the mixture may not be completely melt-kneaded. If it exceeds 30 minutes, the molecular weight of the polyolefin (A) may be lowered.

After the powdery ultrahigh-molecular-weight polyolefin (A) and the flowability improver (B) are melt-kneaded, the mixture may be fed into a die of various desired shapes to give homogeneous extrusion-molded articles such as a filament, a sheet, a T-die film, a pipe, a rod, a tape, and an inflation film. The melt-extruded filaments, sheets, T-die films, pipes, rods, tapes, inflation, films, etc. have excellent stretchability because the flowability improver (B) is dispersed homogeneously in the ultrahigh-molecular-weight polyolefin (A). Ultrahigh-molecular-weight polyolefin stretched articles having high modulus and high tensile strength can be easily produced by stretching the melt-extruded articles at a temperature lower than the melting point of the polyolefin (A), and removing the flowability improver (B) from the molded articles before, during or after the stretching.

The stretching operation may be carried out by the dry method or the wet method, generally in two or more multiple stages. The suitable stretching temperature is a temperature below the melting point of the stretched article under restraining, and at least 90°C, preferably at least 100°C. The stretch ratio is 6 to 50, especially 10 to 30. Good stretchability can be maintained, and the flowability improver can be removed, by carrying out the stretching operation in a solvent incapable of dissolving the ultrahigh-molecular-weight polyolefin (A) but capable of dissolving the flowability improver (B).

When the composition obtained is cooled to room temperature, it solidifies while the flowability improver (B) remains homogeneously dispersed and the flowability improver (B) does not flow out of the composition. Accordingly, the polyolefin (A) may be maintained at a constant concentration, and the stretchability of the composition is not degraded even when it is stored at room temperature.

Additives normally incorporated in polyolefins, such as heat stabilizers, weather stabilizers, pigments, dyes and inorganic fillers may be used during mixing of the powdery polyolefin (A) and the flowability improver (B) in amounts which do not impair the objects of this invention.

In the process of this invention, the normally solid flowability improver is melted by heating, and the ultrahigh-molecular-weight polyolefin is mixed with and dispersed in the molten flowability improver. Accordingly, a homogeneous mixture can be produced, and the resulting composition has excellent stretchability, storage stability and transportation stability.

The following examples illustrate the present invention in greater detail. It should be understood that the invention is not limited to these examples unless it departs from its scope described and claimed herein.

6

EXAMPLE 1

A powder of ultrahigh-molecular-weight polyethylene (($\eta$) = 7.42 dl/g; average particle diameter = 200 microns) was put in molten paraffin wax (melting point = 69°C; molecular weight = 460) maintained at 100°C together with 3,5-ditert-butyl-4-hydroxytoluene (heat stabilizier; in a concentration of 0.1% by weight), and the mixture was stirred for 10 minutes to form a dispersion having a concentration of 30% by weight. The viscosity at 100°C of the molten paraffin wax was 5.3 centipoises, and the swelling ratio of the ultrahigh-molecular-weight polyethylene in the dispersion was 1.08. Subsequently, the dispersion was melt-kneaded at a rotating speed of 100 rpm with a residence time of 1 minute by using a twin-screw extruder whose screws were adapted to rotate in the same direction (screw diameter = 30 mm; L/D = 42; preset temperatures 100°C at the feed portion, 130°C at the first conveying portion, and 190°C at the pressure elevating portion, the mixing portion and the second conveying portion; BT-30-S2-42-L made by Plastic Kogakuscha). The resulting composition was stored for 10 days at room temperature, and then stretched. The properties of the stretched article were examined, and the results are shown in Table 1.

The filament obtained after stretching had an ($\eta$) of 7.25 dl/g, and thus the decrease ratio of ($\eta$) was 3.6 %.

Table 1 Concentration of polyethylene before stretching:      34% by weight
Stretch ratio:      20
Strength:      2.63 GPa
Modulus:      83.6 GPa
Elongation:      3.88%

COMPARATIVE EXAMPLES 1

The same powdery ultrahigh-molecular-weight polyethylene as used in Example 1 was dispersed in the same concentration as described in Example 1 in paraffin oil (pour point = -17.5°C; molecular weight-about 300) kept at 100°C. The dispersion was melt-kneaded in an extruder under the same conditions as in Example 1. The resulting composition was stored for 10 days at room temperature, and then stretched. The paraffin oil flowed out of the composition, and the concentration of polyethylene in it increased as compared with the composition obtained in Example 1. Accordingly, the stretchability of the composition was lower than in Example 1, and the stretch ratio could not be raised to the level used in Example 1. The properties of the final stretched article which are shown in Table 2 were lower than those in Example 1.

Table 2 Concentration of polyethylene before stretching:      45.1% by weight
Stretch ratio:      16
Strength:      2.14 GPa
Modulus:      72.32 GPa
Elongation:      4.3%

COMPARATIVE EXAMPLES 2

A dispersion was prepared in accordance with the same mixing ratio of the components and the same method as described in Example 1. It was stirred at 150°C. Ten minutes later, the molten ultrahigh-molecular-weight polyethylene wrapped in fiber form around the stirrer, and because of this overload, the stirrer failed to operate. Blockage occurred in the transfer piping leading to the extruder, and the composition could not be transferred.

**Claims**

1. A process for producing an ultrahigh-molecular-weight polyolefin composition, which comprises mixing a powder of an ultrahigh-molecular-weight polyolefin (A) having an intrinsic viscosity ($\eta$) of at least 5 dl/g and a flowability improver (B) being normally solid and having a melting point lower than the melting point of the polyolefin (A) with stirring at a temperature corresponding to the melting point of the flowability improver (B) or higher but lower than the melting point of the polyolefin (A), and then melt-kneading the resulting mixture at a temperature corresponding to the melting point of the polyolefin (A) or higher.

2. The process of claim 1 wherein the powder of the ultrahigh-molecular-weight polyolefin (A) has a particle diameter of 1 to 300 microns.

3. The process of claim 1 wherein the ultrahigh-molecular-weight polyolefin is an ethylene homopolymer or a highly crystalline copolymer of ethylene with another alpha-olefin.

4. The process of claim 1 wherein the ultrahigh-molecular-weight polyolefin has an intrinsic viscosity ($\eta$) of 7 to 30 dl/g.

5. The process of claim 1 wherein the flowability improver (B) is an aliphatic hydrocarbon compound or its derivative.

6. The process of claim 1 wherein the flowability improver (B) is a n-alkane having at least 22 carbon atoms or a mixture comprising said n-alkane as a major component, a paraffin wax, or a polyethylene wax.

7. The process of claim 1 wherein the flowability improver (B) is a fatty acid, aliphatic alcohol, fatty acid amide, fatty acid ester, aliphatic mercaptan, aliphatic aldehyde or aliphatic ketone having 12 to 50 carbon atoms.

8. The process of claim 1 wherein 10 to 80% by weight of the powder of the ultrahigh-molecular-weight polyolefin (A) is mixed with 90 to 20% by weight of the flowability improver (B).

9. The process of claim 1 wherein 20 to 60% by weight of the powder of the ultrahigh-molecular-weight polyolefin (A) is mixed with 80 to 40% by weight of the flowability improver (B).

10. The process of claim 1 wherein the powder of the ultrahigh-molecular-weight polyolefin (A) and the flowability improver (B) are mixed at a temperature 10°C higher than the melting point of the flowability improver (B) to a temperature 20°C lower than the melting point of the ultrahigh-molecular-weight polyolefin (A).

11. The process of claim 1 wherein the powder of the ultrahigh-molecular-weight polyolefin (A) and the flowability improver (B) are mixed at a temperature at which the flowability improver (B) shows a viscosity of 1 to 50 centipoises.

12. A process for producing a stretched article of an ultrahigh-molecular-weight polyolefin, which comprises mixing 10 to 80% by weight of a powder having a particle diameter of 1 to 300 microns of an ultrahigh-molecular-weight polyolefin (A) having an intrinsic viscosity ($\eta$) of 5 to 30 dl/g and 90 to 20% by weight of a flowability improver (B) being normally solid and having a melting point 20 to 70°C lower than the melting point of the polylefin (A) of a temperature corresponding to the melting point of the flowability improver (B) or higher but lower than the melting point of the polyolefin (A) thereby to form a dispersion in which the flowability improver (B) is a dispersion medium and the particles of the polyolefin (A) are a disperse phase and the polyolefin (A) is in the state of being not substantially dissolved in, but being swollen with, the flowability improver (B), melt-kneading the dispersion at a temperature corresponding to the melting point of the polyolefin (A) or higher, extruding the melt-kneaded mixture through a die to form a molded article, stretching the extrusion-molded article, and removing the flowability improver (B) from the molded article before, during or after the stretching.

13. The process of claim 12 wherein the particles of the ultrahigh-molecular-weight polyolefin (A) in said dispersion has a swelling ratio of 1.03 to 1.5 by weight.

14. An ultrahigh-molecular-weight polyolefin dispersion composed of a disperse phase of particles with a particle diameter of 1 to 300 microns of an ultrahigh-molecular-weight polyolefin (A) having an intrinsic viscosity ($\eta$) of 5 to 30 dl/g and a continuous dispersion medium of a flowability improver (B) being normally solid and having a melting point 20 to 70°C lower than the melting point of the polyolefin (A), said polyolefin (A) being present in an amount of 10 to 80% by weight and said flowability improver (B) being present in an amount of 90 to 20% by weight, and said polyolefin (A) being in the state of being not substantially dissolved in, but being swollen with, the flowability improver (B) to a swelling ratio of 1.03 to 1.5 by weight.

15. The dispersion of claim 14 which further comprises a sterically hindered phenol as a heat stabilizer in a concentration of 0.07 to 1.0 % by weight.

16. A molded article obtained by melt-molding the ultrahigh-molecular-weight polyolefin dispersion of claim 14.

17. A stretched article obtained by melt-molding the ultrahigh-molecular-weight polyolefin dispersion of claim 14, stretching the molded article and removing the flowability improver (B) from it.